(19) Europäisches Patentamt
European Patent Office
Office européen des brevets

(11) **EP 1 668 456 B1**

(12) **EUROPEAN PATENT SPECIFICATION**

(45) Date of publication and mention
of the grant of the patent:
**28.07.2010 Bulletin 2010/30**

(21) Application number: **04784420.4**

(22) Date of filing: **17.09.2004**

(51) Int Cl.:
***G06K 9/00*** *(2006.01)*     ***G06F 3/00*** *(2006.01)*

(86) International application number:
**PCT/US2004/030552**

(87) International publication number:
**WO 2005/033856 (14.04.2005 Gazette 2005/15)**

(54) **RECOGNITION OF SCRIBED INDICIA ON A USER INTERFACE**

ERKENNUNG VON GERITZTEN INDICIA AUF EINER BENUTZERSCHNITTSTELLE

RECONNAISSANCE DE CARACTERE ECRIT SUR UNE INTERFACE UTILISATEUR

(84) Designated Contracting States:
**DE FR GB IT**

(30) Priority: **29.09.2003 CN 03132705**

(43) Date of publication of application:
**14.06.2006 Bulletin 2006/24**

(73) Proprietor: **MOTOROLA, INC.**
**Schaumburg, IL 60196 (US)**

(72) Inventors:
• **ZHEN, Li-Xin**
**Shanghai 20042 (CN)**
• **GUO, Feng-Jun**
**Shanghai 200031 (CN)**

• **HE, Rong-Kui**
**Beijing, BJ 100854 (CN)**
• **RAO, Hong**
**Beijing, BJ 100028 (CN)**

(74) Representative: **McLeish, Nicholas Alistair**
**Maxwell**
**Boult Wade Tennant**
**Verulam Gardens**
**70 Gray's Inn Road**
**London WC1X 8BT (GB)**

(56) References cited:
**WO-A1-01/35322**     **WO-A1-02/103619**
**US-A- 5 410 612**     **US-A- 5 889 888**
**US-A1- 2002 114 516**     **US-B1- 6 289 303**

**Description**

FIELD OF THE INVENTION

This invention relates to performing recognition of scribed indicia on a user interface. The invention is particularly useful for, but not necessarily limited to, performing automatic punctuation mark recognition of indicia scribed on a touch screen of an electronic device.

BACKGROUND OF THE INVENTION

One of the main growth areas in screen devices is in small portable devices, such as mobile telephones, personal digital assistants (PDA), global positioning system (GPS) navigators and the like. These devices adopt various methods for entering symbols or data, for instance real or virtual buttons, voice recognition, character recognition, etc. In the last case, a character is hand scribed into a scribe area on a touch screen display and character recognition software is used to determine what the hand scribed character is. Hand scribing character input techniques are particularly useful when inputting complex characters such as Chinese, Japanese or Korean characters, where a keyboard or keypad is too small for all the characters or there are too many for the user to find the correct key easily.

When hand scribing a sentence on a touch screen display a user needs to insert punctuation marks, for instance, to separate words into sentence and sub sentences. However, because the area of the touch screen display is relatively small (especially for PDAs and radio telephones), there may be insufficient space to allocate a dedicated punctuation soft keyboard area for all the major commonly used punctuation marks (such as done e.g. in US-A-5 829 888). To overcome the problem of insufficient space on the touch screen, punctuation marks may be scribed by the user and character recognition software can then identify characters as alphanumeric text or punctuation marks. This can be achieved by a common recognition software operation in a common recognition mode for both alphanumeric text characters and punctuation marks. However, character recognition accuracy is degraded using such common recognition software. In contrast, a user can select either punctuation mark recognition or character recognition therefore improving recognition accuracy at the cost of user inconvenience, such as done e.g. in WO-A 0135322.

In this specification, including the claims, the terms 'comprises', 'comprising' or similar terms are intended to mean a non-exclusive inclusion, such that a method or apparatus that comprises a list of elements does not include those elements solely, but may well include other elements not listed.

SUMMARY OF THE INVENTION

According to one aspect of the invention there is provided a method for performing recognition of a scribed indicia on a user interface of an electronic device, the method comprising:

receiving a scribed indicia scribed on the user interface, the user interface at least comprising a character scribing area and a punctuation scribing area; determining a proportion of the scribed indicia scribed in the punctuation scribing area relative to the character scribing area; and performing punctuation mark recognition on the scribed indicia when the proportion exceeds a threshold value, the performing punctuation mark recognition determining from a set of punctuation marks at least one candidate punctuation mark resembling the scribed indicia.

Preferably, the method further includes the step of performing character recognition when the proportion does not exceed the threshold value, the performing character recognition determining from a set of characters at least one candidate character resembling the scribed indicia.

Suitably, the performing punctuation mark recognition is effected by comparing the scribed indicia with only a set of punctuation mark templates stored in a memory of the device.

Preferably, the performing character recognition is effected by comparing the scribed indicia with only a set of alphanumeric templates stored in the memory of the device.

The proportion is determined by summing the length of each stroke of the indicia in the character scribing area and punctuation scribing area.

Suitably, the threshold value is at least 70%.

Preferably, the punctuation mark templates includes representations of the following marks: ",", "!","?", ".", ";" and ":".

Preferably, the punctuation mark templates includes representations of the following marks: "(", "[" and "{".

BRIEF DESCRIPTION OF THE DRAWINGS

In order that the invention may be readily understood and put into practical effect, reference will now be made to a preferred embodiment as illustrated with reference to the accompanying drawings in which:

Fig. 1 is a block diagram illustrating an embodiment of an electronic device in accordance with an embodiment of the invention;
Fig. 2 is a flow diagram illustrating a method for performing recognition of a scribed indicia on a touch screen of the device of Fig. 1;

Figs 3A and 3B further illustrate the method of FIG 2;

FIGs. 4A and 4B illustrate how steps of normalizing is effected in the method of FIG. 2; and

FIGs. 5A and 5B illustrate a transforming curved lines of scribed indicia that can be part of the method of FIG. 2.

## DETAILED DESCRIPTION OF THE PREFERRED EMBODIMENT OF THE INVENTION

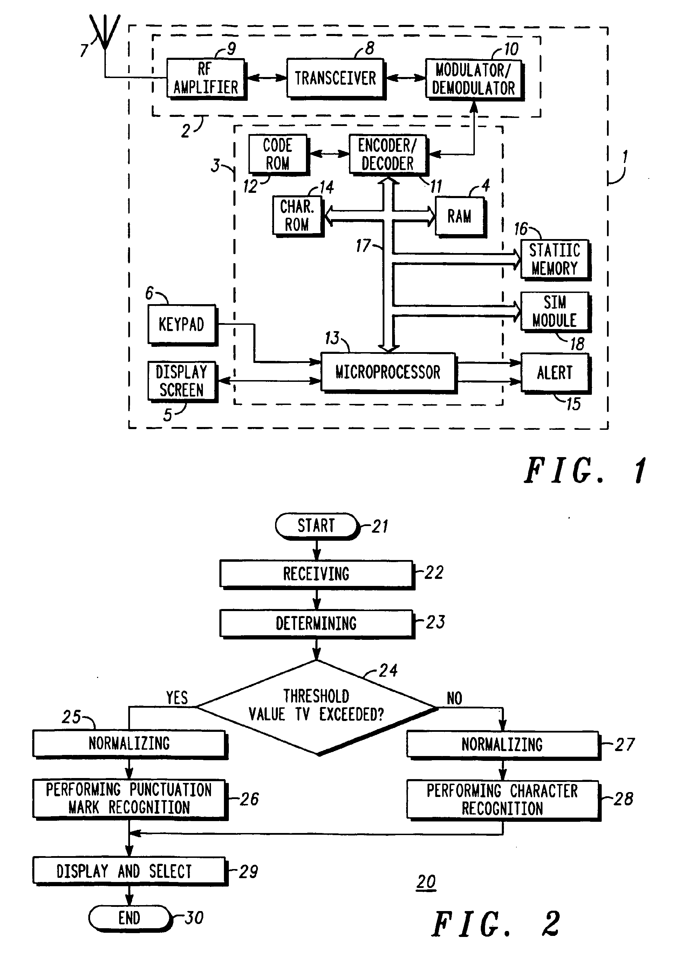

In the drawings, like numerals on different Figs are used to indicate like elements throughout. With reference to Fig. 1, there is illustrated an electronic device 1 in the form of a radio telephone comprising a radio frequency communications unit 2 coupled to be in communication with a processor 3. An input interface in the form of a touch screen 5 and a keypad 6 are also coupled to be in communication with the processor 3.

The processor 3 includes an encoder/decoder 11 with an associated Read Only Memory (ROM) 12 storing data for encoding and decoding voice or other signals that may be transmitted or received by the radio telephone 1. The processor 3 also includes a micro-processor 13 coupled, by a common data and address bus 17, to an encoder/decoder 11 and an associated character Read Only Memory (ROM) 14, a Random Access Memory (RAM) 4, static programmable memory 16 and a removable SIM module 18. The static programmable memory 16 and SIM module 18 each can store, amongst other things, two sets of templates one of the sets being a set of punctuation mark templates PT such as ",", "!","?", ".", "(", "[", "{", ";", ":" and the other set being a set of alphanumeric character templates AT comprising letters of the alphabet, numbers 1 to 10 and arithmetic operators "+", "-" etc.

The micro-processor 13 has ports for coupling to the keypad 6, the screen 5 and an alert module 15 that typically contains a speaker, vibrator motor and associated drivers. The character Read only memory 14 stores code for decoding or encoding text messages that may be received by the communication unit 2, input at the keypad 6. In this embodiment the character Read Only Memory 14 also stores operating code (OC) for micro-processor 13 and code for performing a method as described below.

The radio frequency communications unit 2 is a combined receiver and transmitter having a common antenna 7. The communications unit 2 has a transceiver 8 coupled to antenna 7 via a radio frequency amplifier 9. The transceiver 8 is also coupled to a combined modulator/demodulator 10 that couples the communications unit 2 to the processor 3.

The electronic device 1 can be any electronic device including a radio telephone, a conventional type telephone, a laptop computer or a PDA. If the electronic device 1 is a radio telephone, a user can select an application by traversing menus, or selecting icons, displayed on the touch screen 5.

The touch screen 5 has an incorporated driver that is controllable by micro-processor 13. The touch screen 5 is two-way user input interface for typically allowing data entry, invoking device applications and commands, menu traversing, displaying text, displaying graphics and displaying menus. Data entry, and other user input requirements, to the touch screen 5 is typically by use of a stylus and may involve scribing characters onto the touch screen 5 as will be apparent to a person skilled in the art.

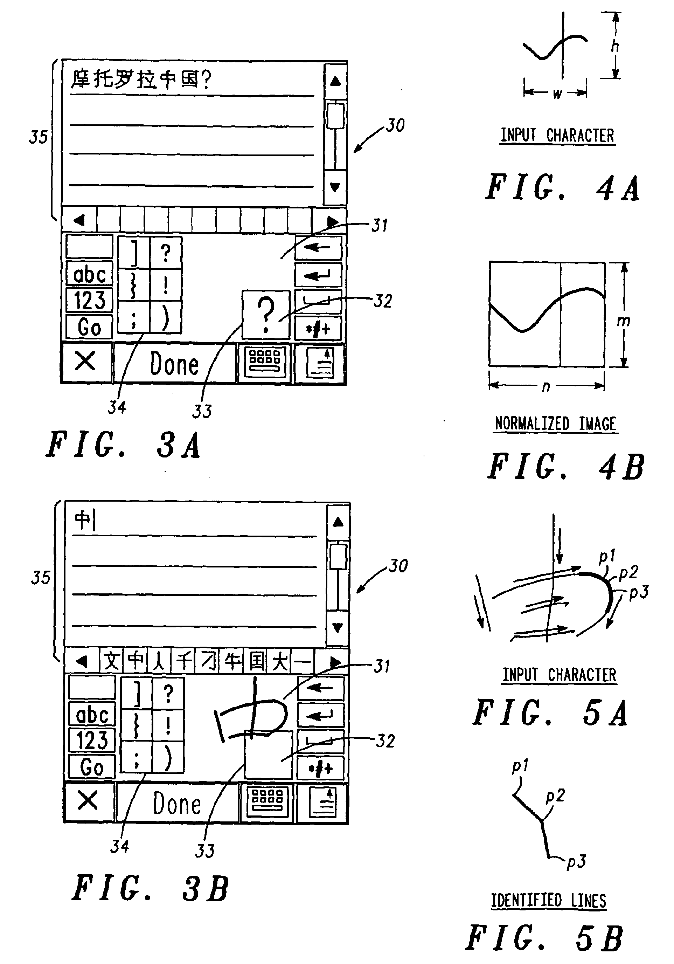

Referring to Figs. 2, 3A and 3B, there is illustrated a method 20 for performing recognition of a scribed indicia on the user interface in the form of the touch screen 5. The method 20 has steps that includes a start step 21, a step of receiving 22 a scribed indicia scribed on the touch screen 5. The touch screen 5 has a display surface 30 with a designated character scribing area 31 and a designated punctuation scribing area 32 defined partly by the boundary 33 (this boundary need not be displayed on the display surface 30). A step of determining 23 then provides for determining a proportion of the scribed indicia scribed in the punctuation scribing area 32 relative to the character scribing area 31. After step 23 a test is conducted at a test step 24 to determine if the proportion exceeds a threshold value TV that is typically set to 70%. If this threshold value TV is exceeded then the scribed indicia is normalized at a normalizing step 25 and then a performing step 26 provides for performing punctuation mark recognition on the scribed indicia, the performing determining only from the set of punctuation mark templates PT at least one candidate punctuation mark resembling the scribed indicia.

If at test step 24 the threshold value TV is not exceeded then the scribed indicia is normalized at a normalizing step 27 and then a performing step 28 provides for performing character recognition on the scribed indicia, the performing determining only from the set of alphanumeric templates AT at least one candidate character resembling the scribed indicia.

After either step 26 or 28 a display and select step 29 is effected where one or more candidate punctuation marks or alphanumeric characters are displayed in a display area 34 of the screen 5. A user then can select an appropriate punctuation mark or alphanumeric character by touching one of the displayed characters or punctuation marks. The selected punctuation mark or alphanumeric character is then inserted into a text string (text message) at a message display area 35 and the method the ends at a step 30.

The start step 21 is invoked typically when a stylus makes contact with the touch screen 5 and at the step of receiving 22 the processor 3 initializes sampling registers (Rs) in the Microprocessor 13. As each stroke of an indicia is scribed on the touch screen 5, the Microprocessor 13 takes samples of the stroke and stores a sampled version thereof in the sampling registers Rs to build a sampled indicia. When the stylus that is scribing the character is lifted from the touch screen 5, a timer is invoked and unless the stylus makes contact again with the touch screen 5 within a pre-defined interval of 0.5 seconds, it is assumed the indicia is completed.. However, if the stylus makes contact again with the touch screen 5 within 0.5 seconds then the next stroke is sampled and forms part of the sampled indicia stored in the sampling registers Rs.

In the steps of normalizing 25 or 27, the sampled indicia is normalized to provide a scaled character that fits within a defined boundary (typically the boundary effectively encloses an array of 64 by 64 pixels). To further illustrate the steps of normalizing 25 or 27, reference is now made to Fig. 4A that illustrates a handwritten character scribed on the touch screen 5. The steps of normalizing 25 or 27, are based on interpolation and *w* and *h* identify the respective width and height of the input character in Fig. 4A. Further, *n* and *m* are the respective width and height of a predefined boundary B (or frame) of Fig. 4B. As will be apparent to a person skilled in the art, every input indicia is normalized to fit within the boundary B. Thus at the step of normalizing 23, varaibles $In\_[i]$ and $In\_y[i]$ are set to be *x-y* coordinates of a point of the input character of Fig. 7a. Also, $N\_x[j]$ and $N\_y[j]$ are set as *x-y* coordinates of the corresponding point in the normalized image of Fig. 4B. Thus, equations -(1) and -(2) below define the relationship for normalizing.

$$N\_x[j] = In\_x[i] \cdot n/w \quad \text{-(1)}$$

$$N\_y[j] = In\_y[i] \cdot m/h \quad \text{-(2)}$$

Further to the above, many scribed characters (and some punctuation marks) comprise curved lines that should be converted into straight lines for processing by the method 20. Therefore the method 20 can include a step of transforming curved lines of indicia into straight lines for use in the steps 26 or 28 and also for use in the determining step 23 for determining the proportion of the scribed indicia scribed in the punctuation scribing area 32 relative to the character scribing area 31. In FIG. 5A, a scribed character having a curved portion input on touch screen 5 is illustrated. A part of the curved portion is between points p1 and p3. This curved portion is transformed into two straight lines p1 to p2 and p2 to p3 as illustrated in Fig. 5B. Accordingly, curved portions are decomposed into smaller portions and are then approximated into straight lines. This transforming step can be done either before or after normalizing. When used in the determining step each length (determined by pixel count) of the straight lines inside the punctuation scribing area 32 are summed and each of the straight lines in the character scribing area 31 are summed to determined the proportion of the scribed indicia inside area 32 relative to area 31. Hence, the determining effectively performs a summing the length of each stroke scribed on the touch screen to determine the proportion of the scribed indicia inside area 32. However, other criterion can be used such as scribed indicia boundaries can be estimated and used to determine the proportion of the scribed indicia inside area 32 relative to area 31.

Advantageously, the present invention provides for automatic selection of punctuation mark recognition or character recognition therefore improving recognition accuracy without readily affecting user inconvenience.

The detailed description provides a preferred exemplary embodiment only, and is not intended to limit the scope, applicability, or configuration of the invention. Rather, the detailed description of the preferred exemplary embodiment provides those skilled in the art with an enabling description for implementing preferred exemplary embodiment of the invention. It should be understood that various changes may be made in the function and arrangement of elements without departing from the scope of the invention as set forth in the appended claims.

## Claims

1. A method for performing recognition of a scribed indicia on a user interface of an electronic device, the method comprising:

   receiving a scribed indicia scribed on the user interface, the user interface at least comprising a character scribing area and a punctuation scribing area;
   determining a proportion of the scribed indicia scribed in the punctuation scribing area relative to the character scribing area; and
   performing punctuation mark recognition on the scribed indicia when the proportion exceeds a threshold value, the performing punctuation mark recognition determining from a set of punctuation marks at least one candidate punctuation mark resembling the scribed indicia.

2. A method as claimed in claim 1, further including the step of performing character recognition when the proportion does not exceed the threshold value, the performing character recognition determining from a set of characters at least one candidate character resembling the scribed indicia.

3. A method as claimed in claim 1, wherein the performing punctuation mark recognition is effected by comparing the scribed indicia with only a set of punctuation mark templates stored in a memory of the device.

4. A method as claimed in claim 2, the performing character recognition is effected by comparing the scribed indicia with only a set of alphanumeric templates stored in the memory of the device.

5. A method as claimed in claim 1, wherein the proportion is determined by summing the length of each stroke of the indicia in the character scribing area and punctuation scribing area.

6. A method as claimed in claim 1, wherein the threshold value is at least 70%.

7. A method as claimed in claim 1, wherein the punctuation mark templates includes representations of the following marks: ",", "!", "?", ".", ";" and ":".

8. A method as claimed in claim 1, wherein the punctuation mark templates includes representations of the following marks: "(", "[" and "{".

## Patentansprüche

1. Verfahren zur Ausführung einer Erkennung einer eingeritzten Markierung auf einer Benutzerschnittstelle einer elektronischen Vorrichtung, wobei das Verfahren die folgenden Schritte aufweist:

Empfang einer eingeritzten Markierung, welche auf der Benutzerschnittstelle eingeritzt ist, wobei die Benutzerschnittstelle zumindest einen Buchstaben-Einritzbereich und einen Interpunktions- bzw. Zeichensetzungs-Einritzbereich aufweist;
Bestimmung eines Anteils der in den Interpunktions-Einritzbereich eingeritzten Einritz-Markierungen im Verhältnis zum Buchstaben-Einritzbereich; und
Ausführung einer Satzzeichen-Erkennung bei den eingeritzten Markierungen, wenn das Verhältnis einen Schwellenwert überschreitet, wobei die Ausführung einer Satzzeichen-Erkennung aus einer Gruppe von Satzzeichen zumindest ein Kandidat-Satzzeichen bestimmt, welches der eingeritzten Markierung ähnlich ist.

2. Verfahren nach Anspruch 1, welches des Weiteren den Schritt der Ausführung einer Buchstaben-Erkennung einschließt, wenn das Verhältnis den Schwellenwert nicht überschreitet, wobei die Ausführung der Buchstaben-Erkennung aus einer Gruppe von Buchstaben zumindest einen Kandidat-Buchstaben bestimmt, welcher der eingeritzten Markierung ähnlich ist.

3. Verfahren nach Anspruch 1, **dadurch gekennzeichnet, dass** die Ausführung einer Satzzeichen-Erkennung durch Vergleichen der eingeritzten Markierungen mit nur einem in einem Speicher der Vorrichtung gespeicherten Satz von Satzzeichen-Vorlagen erfolgt.

4. Verfahren nach Anspruch 2, **dadurch gekennzeichnet, dass** die Ausführung einer Buchstaben-Erkennung durch Vergleichen der eingeritzten Markierungen mit nur einem in dem Speicher der Vorrichtung gespeicherten Satz von alphanumerischen Vorlagen erfolgt.

5. Verfahren nach Anspruch 1, **dadurch gekennzeichnet, dass** das Verhältnis durch Addieren der Länge eines jeden Strichs der Markierungen in dem Buchstaben-Einritzbereich und in dem Satzzeichen-Einritzbereich bestimmt wird.

6. Verfahren nach Anspruch 1, **dadurch gekennzeichnet, dass** der Schwellenwert bei mindestens 70% liegt.

7. Verfahren nach Anspruch 1, **dadurch gekennzeichnet, dass** die Satzzeichen-Vorlagen Darstellungen der folgenden Zeichen einschließen: ",", "!", "?", ".", ";" und ":".

8. Verfahren nach Anspruch 1, **dadurch gekennzeichnet, dass** die Satzzeichen-Vorlagen Darstellungen der folgenden Zeichen einschließen: "(", "[" und "{".

## Revendications

1. Procédé d'exécution de reconnaissance d'indices écrits sur une interface utilisateur d'un dispositif électronique, le procédé comprenant:

recevoir un indice écrit, écrit sur l'interface utilisateur, l'interface utilisateur comprenant au moins une zone d'écriture de caractères et une zone d'écriture de ponctuation;
déterminer une proportion des indices écrits, écrits dans la zone d'écriture de ponctuation, relativement à la zone d'écriture de caractères; et
exécuter une reconnaissance de marques de ponctuation sur l'indice écrit lorsque la proportion dépasse une valeur de seuil, l'exécution de la reconnaissance de la marque de ponctuation déterminant à partir d'un ensemble de marques de ponctuation au moins une marque de ponctuation candidate ressemblant à l'indice écrit.

2. Procédé selon la revendication 1, comportant en outre l'étape consistant à exécuter une reconnaissance de caractères lorsque la proportion ne dépasse pas la valeur de seuil, l'exécution de la reconnaissance de caractères déterminant à partir d'un ensemble de caractères au moins un caractère candidat ressemblant à l'indice écrit.

3. Procédé selon la revendication 1, dans lequel l'exécution de la reconnaissance de marques de ponctuation est effectuée en comparant l'indice écrit avec seulement un ensemble de modèles de marques de ponctuation stockés dans une mémoire du dispositif.

4. Procédé selon la revendication 2, l'exécution de la reconnaissance de caractères est effectuée en comparant l'indice écrit avec seulement un ensemble de modèles alphanumériques stockés dans la mémoire du dispositif.

5. Dispositif selon la revendication 1, dans lequel la proportion est déterminée en additionnant la longueur de chaque course de l'indice dans la zone d'écriture de caractères et la zone d'écriture de ponctuations.

6. Procédé selon la revendication 1, dans lequel la valeur de seuil est au moins de 70%.

7. Procédé selon la revendication 1, dans lequel les modèles de marques de ponctuation comprennent des représentations des marques suivantes: ", ", "!", "?", ".", ";" et ":".

8. Procédé selon la revendication 1, dans lequel les modèles de marque de ponctuation comprennent des représentations des marques suivantes: "(", "[" et "{".

*FIG. 1*

*FIG. 2*

FIG. 3A

FIG. 3B

INPUT CHARACTER

FIG. 4A

NORMALIZED IMAGE

FIG. 4B

INPUT CHARACTER

FIG. 5A

IDENTIFIED LINES

FIG. 5B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5829888 A

- WO 0135322 A